# FASCICULE DE BREVET EUROPEEN

(11) **EP 3 003 834 B1**
(45) Date de publication et mention de la délivrance du brevet: **22.03.2017**
(21) Numéro de dépôt: 14726397.4
(22) Date de dépôt: 11.04.2014
(51) Int. Cl.: B62D 25/02, B62D 29/04, B62D 27/06

(54) **STRUCTURE DE CAISSE D'UN VÉHICULE AUTOMOBILE AVEC CÔTÉ DE CAISSE ARRIÈRE INTERCHANGEABLE**
KAROSSERIESTRUKTUR EINES KRAFTFAHRZEUGS MIT AUSTAUSCHBARER HINTERER KAROSSERIE
BODY STRUCTURE OF A MOTOR VEHICLE HAVING AN INTERCHANGEABLE REAR BODY SIDE

(30) Priorité: 04.06.2013 FR 1355094
(43) Date de publication de la demande: 13.04.2016
(73) Titulaire: Renault S.A.S., 92100 Boulogne-Billancourt (FR)
(72) Inventeur: BEZEAULT, Loic, F-78000 Versailles (FR); LAW, Robin, F-92380 Garches (FR)
(86) Numéro de dépôt international: PCT/FR2014/050881
(87) Numéro de publication internationale: WO 2014/195590

(56) Documents cités:
- EP-A1- 0 282 306
- WO-A1-99/12798
- DE-A1-102010 053 958

## Description

### Domaine technique de l'invention

L'invention concerne la structure de caisse d'un véhicule automobile, plus particulièrement les parties latérales, appelées communément côtés de caisse.

L'invention concerne plus particulièrement une structure de caisse d'un véhicule automobile comportant au moins deux côtés de caisse reliés en partie supérieure par un pavillon et délimitant chacun deux ouvertures pour des portes latérales associées du véhicule, chaque côté de caisse comportant au moins un côté de caisse arrière, chacun comprenant une interface structurelle soudée au reste de la structure et sur laquelle vient se fixer une peau de côté de caisse, ladite peau de côté de caisse étant interchangeable et ladite interface structurelle étant commune quelle que soit la version de peau de côté de caisse qu'elle reçoit.

### Etat de la technique

Classiquement, l'industrie automobile se caractérise par un modèle du type à fabrication de très grandes volumes de pièces ultra-standardisées pour la plupart réalisées par emboutissage avec des investissements capitalistiques et capacitaires importants. Par ailleurs, l'évolution des marchés automobiles vers une segmentation de plus en plus fine avec une multiplication permanente des types de carrosserie et des types de produits (et donc une réduction des volumes par produit) ainsi que la tendance croissante de la personnalisation contribuent aussi à rendre l'équation économique pour la conception et la fabrication d'un véhicule automobile de plus en plus difficile.

Pour une telle conception d'un véhicule automobile, les constructeurs automobiles peuvent être amenés aujourd'hui à faire un choix entre deux mondes très différents :
- l'univers des produits à très grands volumes et au prix abordable, exclusivement construit sur des structures de caisse autoporteuses en tôle emboutie ;
- les produits de petits à très petits volumes qui s'ouvrent à d'autres moyens de fabrication ayant des prix de vente beaucoup plus élevés, car destinés notamment au haut de gamme ou à un usage spécifique professionnel (par exemple du type véhicule utilitaire).

Aujourd'hui, un côté de caisse d'une structure de caisse est classiquement réalisé en métal, à savoir en acier ou en aluminium, et fabriqué pour une grande production afin de rentabiliser les investissements. Toutefois, un tel côté de caisse est généralement assemblé par soudure à la structure de caisse, ce qui implique de lourds investissement en termes de machineries notamment, et de tels côtés de caisse ne sont pas personnalisables, notamment car il est difficile de les démonter puis de remonter à l'équivalent un nouveau jeu de côtés de caisse arrière, sinon à diversifier les outils et les moules pour l'emboutissage, ce qui implique là encore de très lourds investissements.

Une première solution d'interchangeabilité d'un côté de caisse a été proposée, notamment comme décrit dans le document DE 10 2010 053 958, montrant une structure de caisse d'un véhicule correspondant au préambule de la revendication 1.
Toutefois, une telle solution n'est pas complètement satisfaisante, notamment en termes de fixation du côté de caisse et de tenue structurelle du côté de caisse, plus particulièrement en cas de choc latéral.

### Objet de l'invention

L'invention a pour but de remédier à l'ensemble des inconvénients précités et a pour objet la réalisation d'une structure de caisse d'un véhicule automobile, qui puisse offrir une possibilité de personnalisation au niveau de ses côtés de caisse, tout en étant simple à réaliser, de façon peu onéreuse et sans de lourds investissements de re-conception complète d'un véhicule.

L'objet de l'invention est caractérisé, plus particulièrement, par le fait que ladite interface structurelle comporte une première portion pleine et une seconde portion ajourée délimitant un réseau de bretelles structurelles, destinées notamment à renforcer le côté de caisse arrière en cas d'appui sur la peau de côté de caisse associée.

Une telle structure de caisse permet ainsi de mettre en place un système de personnalisation de la zone arrière de la structure de caisse, en rendant une partie du côté de caisse montable, démontable et remontable et ce sans impacts sur la structure de caisse de base. Une telle structure de caisse à grand volume de production permet ainsi d'imaginer des parties d'un véhicule automobile « variables » permettant de changer en partie de type de carrosserie, d'usage du véhicule selon les désirs du client, à l'achat voir même en cours de vie du produit, donc avec des volumes de pièces beaucoup plus faibles, mais à un coût acceptable.

D'autres avantages et caractéristiques de l'invention peuvent être considérés isolément ou en combinaison :
- Ladite interface structurelle peut être réalisée en tôle métallique, par exemple en acier ou en aluminium.
- La peau de côté de caisse peut être fixée sur l'interface structurelle par des moyens de fixation démontable, qui peuvent être du type à fixation positive, par exemple du type système de vis-écrou.
- Ladite peau de côté de caisse peut être une pièce en matière plastique réalisée par thermoformage.
- Ladite peau thermoformée peut être fixée sur ladite interface structurelle par l'intermédiaire d'un adaptateur, dont la forme et les dimensions permettent de gérer les écarts d'interface avec la structure de caisse.
- Des moyens de calage, par exemple du type mastic ou mousse, peuvent être agencés entre ladite interface structurelle et ladite peau thermoformée.
- Ladite peau thermoformée peut être réalisée en polypropylène sans renfort et/ou talquée.
- Ladite peau de côté de caisse peut être une pièce en matière plastique réalisée par injection.
- Des moyens de positionnement, par exemple du type pions de centrage et/ou clips de fixation, peuvent être agencés entre ladite interface structurelle et ladite peau injectée.
- Ladite peau injectée peut être réalisée en polypropylène sans renfort et/ou talquée.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une vue partielle en perspective d'un mode particulier de réalisation d'une structure de caisse selon l'invention, les éléments composants un côté de caisse arrière étant représentés en vue éclatée.
La figure 2 représente une vue d'une interface structurelle d'un côté de caisse arrière de la structure de caisse selon la figure 1.
La figure 3 représente un premier mode particulier de réalisation d'une peau d'un côté de caisse destinée à se fixer sur l'interface structurelle selon la figure 2.
Les figures 4a et 4b représentent schématiquement deux vues en coupe de la structure de caisse selon l'invention, équipée du mode particulier de réalisation de la peau de côté de caisse selon la figure 3.
Les figures 5a et 5b représentent schématiquement deux vues en coupe de la structure de caisse selon l'invention, équipée d'une variante de réalisation d'une peau de côté de caisse destinée à se fixer sur l'interface structurelle selon la figure 2.

### Description de modes particuliers de réalisation

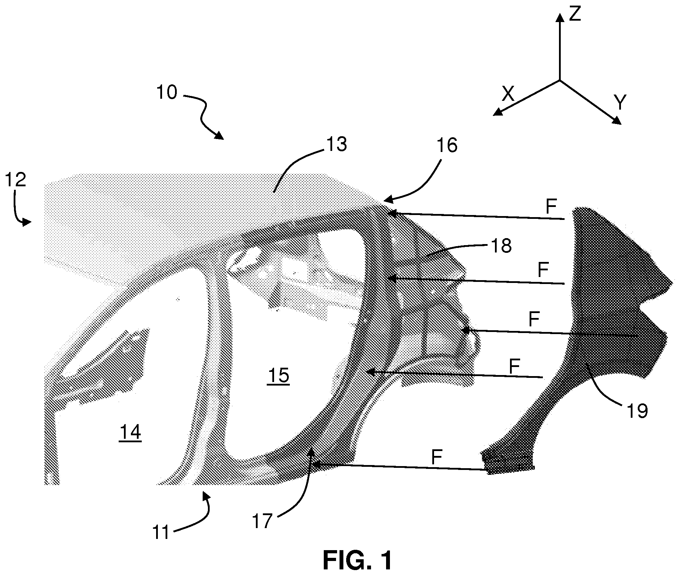

Dans la description qui va suivre, des éléments identiques ou analogues porteront les mêmes chiffres et nombres de référence. Les expressions telles que « arrière » et « avant », « gauche » et « droite », « supérieur » et « inférieur » et les orientations « longitudinale », « transversale » et « verticale » seront définies en référence au trièdre X, Y, Z représenté sur la figure 1 et aux définitions données dans la description. Notamment, la direction longitudinale X correspond au sens de déplacement en marche avant d'un véhicule automobile (non représenté complètement sur les figures pour des raisons de clarté).

En référence aux figures, la structure de caisse 10 selon l'invention a pour objectif de proposer une nouvelle méthode de fabrication/assemblage d'au moins une partie arrière du véhicule automobile, afin de permettre une personnalisation plus forte pour le client à un niveau de coût / prix de vente acceptable (voir de réduire la diversité de la partie non personnalisée afin d'améliorer sa performance économique).

Sur la figure 1, la structure de caisse 10 selon l'invention comporte classiquement deux côtés de caisse 11, 12 reliés en partie supérieure par un pavillon 13 et délimitant chacun deux ouvertures 14, 15 pour des portes latérales associées du véhicule. La structure de caisse 10 comporte également un cadre arrière 16 destiné à recevoir notamment un hayon. Sur les figures 1 à 5b, le principe de l'invention sera décrit en rapport avec le côté de caisse 11 gauche, par rapport à l'axe longitudinal X du véhicule, mais l'invention s'applique de la même façon pour le côté de caisse 12 droit du véhicule.

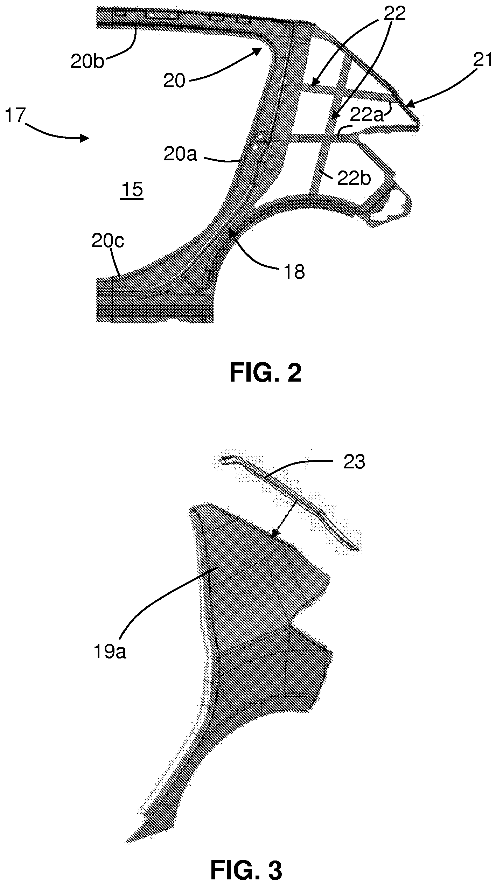

Selon l'invention, le côté de caisse 11 comporte un côté de caisse arrière 17 comprenant une interface structurelle 18, soudée au reste de la structure de caisse 10, et sur laquelle vient se fixer une peau 19 de côté de caisse (selon les flèches F), ladite peau 19 de côté de caisse étant interchangeable et l'interface structurelle 18 étant commune quelle que soit la version de peau 19 de côté de caisse qu'elle reçoit (figures 3 à 5b).

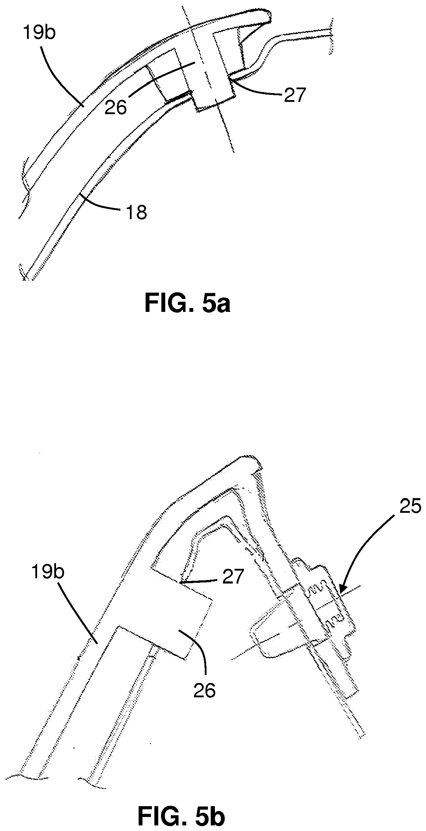

En d'autres termes, grâce à l'interface structurelle 18 formant une partie du côté de caisse arrière 17, il est possible d'installer différentes versions de peaux 19 de côté de caisse, pour pouvoir personnaliser le véhicule selon les souhaits du client. A cet effet, la peau 19 de côté de caisse est fixée sur l'interface structurelle 18 par des moyens 25 de fixation démontable (figure 5b), de préférence des moyens de fixation du type à fixation positive, par exemple du type système de vis-écrou 25 (figure 5b). A titre d'exemple, la peau 19 de côté de caisse est fixée sur l'interface structurelle 18 par une pluralité de systèmes vis-écrou agencés sur le contour de la peau 19.

Ainsi, il est possible de prévoir un démontage de la peau 19 de côté de caisse en cours de vie du véhicule, pour pouvoir notamment changer la couleur de la peau 19 et ce de façon simple, rapide et peu coûteuse. Par ailleurs, il faut noter que le nombre de moyens de fixation 25 prévu dépend notamment de la taille de la peau 19 à fixer, et du véhicule en général, des aspects à garantir sur la zone arrière du véhicule et des jeux à maitriser. Notamment, dans la zone haute de la peau, sensiblement en liaison avec le cadre arrière 16 destiné à recevoir le hayon du véhicule (non représenté sur les figures pour des raisons de clarté), des moyens de fixation glissante sont prévus entre la peau 19 de côté de caisse et l'interface structurelle 18, permettant ainsi de libérer les contraintes lors d'un ensoleillement voire lors du passage en ligne de peinture usine (afin de supporter des températures très hautes et pouvoir subir de fortes dilatations de la peau réalisée en matière plastique).

Selon l'invention et comme représenté plus particulièrement sur les figures 1 et 2, l'interface structurelle 18 commune à toutes les versions de peau 19 utilisées comporte une première portion 20 pleine, délimitant notamment un bord arrière 20a de l'ouverture 15 et une partie des bords supérieur 20b et inférieur 20c de l'ouverture 15. L'interface structurelle 18 comporte également une seconde portion 21 ajourée délimitant un réseau de bretelles 22 structurelles, destinées notamment à renforcer le côté de caisse 17 arrière en cas d'appui sur la peau 19 de côté de caisse associée. Sur la figure 2, l'interface structurelle 18 comporte, de préférence, deux bretelles longitudinales 22a et une bretelle transversale 22b. A titre d'exemple, l'interface structurelle 18 est réalisée en tôle métallique, par exemple en acier ou en aluminium.

Comme représenté sur les figures 3 à 5b, les différentes versions de peaux 19 de côté de caisse sont réalisées préférentiellement en matière plastique pour des raisons de coûts et de facilité de personnalisation (couleurs, stickers, etc.). Sur la figure 3, le premier mode de réalisation d'une peau 19a de côté de caisse est réalisé en matière plastique par thermoformage. Un tel principe de thermoformage est notamment dédié à des versions de peau 19a de côté de caisse à très faible volume (et donc de faible investissement), à savoir avec des formes pas trop complexes, notamment sans contre-dépouilles.

Dans le cas d'une fixation d'une peau 19a de côté de caisse thermoformée, celle-ci est avantageusement fixée sur l'interface structurelle 18 par l'intermédiaire d'un adaptateur 23, dont la forme et les dimensions permettent notamment de gérer les écarts d'interface avec la structure de caisse 10.

Comme représenté plus particulièrement sur la figure 3, en vue de la fixation sur l'interface structurelle 18, la peau 19a thermoformée coopère avec l'adaptateur 23, agencé dans une zone haute de l'interface structurelle 18 et en liaison notamment avec le cadre arrière 16 destiné à recevoir le hayon. L'adaptateur 23 est, de préférence collé sur la peau 19a thermoformée avant fixation sur l'interface structurelle 18. D'une façon générale, un adaptateur 23 est prévu pour chaque version de peau 19a de côté de caisse thermoformée. A titre d'exemple, un tel adaptateur 23 est réalisé en polypropylène et comporte une épaisseur comprise entre 1,5mm et 5mm, de préférence 2,5mm. L'adaptateur 23 peut être réalisé en d'autres matières composites, par exemple de type ABS/PC ou ABS/PMMA ou NORYL GTX, ou en polyamide.

Encore à titre d'exemple, un tel côté de caisse arrière 17 avec l'interface structurelle 18 et la peau 19a thermoformée comporte une épaisseur comprise entre 1,5mm et 5mm, de préférence 2,5mm, suivant notamment le respect des différents cahiers des charges en vigueur, à savoir raideur, cloquage et marquage, et suivant la matière utilisée. La peau 19a thermoformée est réalisée, de préférence, en polypropylène sans renfort et/ou talqué. D'autres matières composites peuvent être envisagées pour la peau 19a thermoformée, par exemple du type ABS/PC ou ABS/PMMA ou NORYL GTX, ou du polyamide.

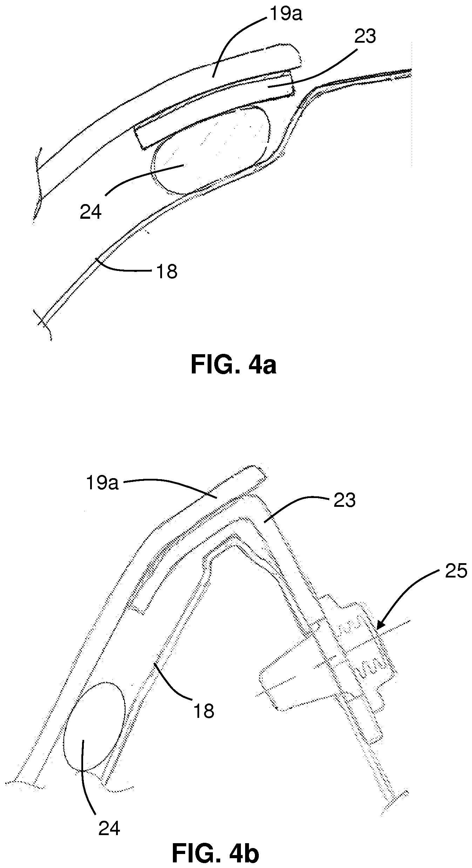

Par ailleurs, comme représenté sur les figures 4a et 4b, dans le cas d'une fixation d'une peau 19a de côté de caisse thermoformée, le côté de caisse arrière 17 comporte avantageusement des moyens de calage 24 agencés entre ladite interface structurelle 18 et ladite peau 19a thermoformée, destinée notamment à faciliter le positionnement de la peau 19a sur l'interface structurelle 18 avant sa fixation.

A titre d'exemple, les moyens de calage 24 peuvent être des plots ou des lignes de mastic ou peuvent être des pains de mousse de différentes matières, par exemple de type PU, PPE, PE. Comme représenté sur la figure 4a, un plot de mastic 24 est agencé entre l'adaptateur 23 et l'interface structurelle 18, lequel adaptateur 23 est fixé sur la peau 19a thermoformée. Sur la figure 4b, illustrant une autre vue en coupe au niveau d'une zone différente de la peau 19a thermoformée, les moyens de calage 24 peuvent également être agencés entre la peau 19a de côté de caisse thermoformée et l'interface structurelle 18. De même, les moyens de fixation 25, par exemple de type vis-écrou comme représentés sur la figure 4b, sont positionnés à la fois au niveau de l'adaptateur 23, mais peuvent aussi être agencés pour fixer directement la peau 19a thermoformée sur l'interface structurelle 18.

Dans la variante de réalisation représentée sur les figures 5a et 5b, la seule différence réside dans la version de la peau 19 de côté de caisse utilisée et venant se fixer sur l'interface structurelle 18, qui elle est commune à toutes les versions de peaux 19 de côté de caisse. Sur les figures 5a et 5b, la peau 19b de côté de caisse destinée à venir se fixer sur l'interface structurelle 18 commune est une pièce en matière plastique réalisée par injection. Un tel principe d'injection est notamment dédié à des versions de peau 19b de côté de caisse à gros volume (notamment parce que les pièces sont issues de moules onéreux), à savoir pouvant comprendre des formes plus complexes, du type contre-dépouilles, renforcement, clips, etc.

A titre d'exemple, la peau 19b de côté de caisse injectée est réalisée en matière plastique, de préférence, en polypropylène sans renfort et/ou talqué. D'une façon générale, la matière utilisée doit être en adéquation avec les cahiers des charges en vigueur en termes de prestations de sécurité, de qualité, etc. Toutefois, d'autres matières composites pourraient être envisagées, notamment du type NORYL GTX ou un polyamide. Encore à titre d'exemple, la peau 19b injectée comporte une épaisseur comprise entre 2mm et 3,5mm, par exemple de l'ordre de 3mm.

Par ailleurs, dans le cas d'une peau 19b de côté de caisse injectée, un principe de pions de centrage 26 est avantageusement utilisé afin de positionner au mieux la peau 19b avant sa fixation sur l'interface structurelle 18. Sur les figures 5a et 5b, les pions de centrage 26 sont avantageusement venus de matière avec la peau 19b de côté de caisse en matière plastique injectée et coopèrent avec des orifices 27 associés de l'interface structurelle 18. Des clips de fixation (non représentés sur les figures pour des raisons de clarté) peuvent ensuite être utilisés afin de consolider la liaison entre la peau 19b de côté de caisse injectée et l'interface structurelle 18.

Un procédé de montage d'un tel côté de caisse 17 arrière sur une structure de caisse 10 selon l'invention va maintenant être décrit en référence aux figures 1 à 5b. Après fixation de l'interface structurelle 18, sur le reste de la structure de caisse 10, une première étape consiste à mettre en position la peau 19 de côté de caisse par le haut, à savoir sensiblement au niveau de la liaison avec le cadre arrière 16, notamment dans le cas d'une peau 19a thermoformée utilisant l'adaptateur 23. Puis, une seconde étape consiste ensuite à basculer la peau 19 vers le bas afin de plaquer l'ensemble de la peau 19 sur l'interface structurelle 18.

Par ailleurs, dans le cas de la fixation d'une peau 19b injectée, une troisième étape supplémentaire consiste à effectuer un mouvement latéral vers l'arrière ou l'avant, dans le cas d'une utilisation de clips de fixation comme décrit ci-dessus.

Ainsi, quel que soit le mode de réalisation de la structure de caisse 10 selon l'invention, celle-ci présente de nombreux avantages :
- L'interface structurelle 18 du côté de caisse 17 arrière est transverse à toutes solutions de peaux 19, quelles que soient les formes stylistiques.
- Les bretelles 22 de l'interface structurelle 18 permettent de conserver et garantir une raideur d'accueil suffisante pour les différentes peaux 19 de côtés de caisse.
- De telles peaux 19 de côté de caisse sont interchangeables en cours de vie ou en après-vente. Une telle solution apporte ainsi une souplesse dans le procédé de réparation des côtés de caisse arrière. Pour les solutions existantes, il faut découper et dé-souder les côtés de caisse de la structure afin de remettre des pièces à l'identique (nouvelle soudure). Grâce à l'invention, les peaux 19 plastiques sont démontables facilement, ce qui implique donc un gain considérable en termes de temps d'atelier.
- La diversité des matières et des procédés d'obtention des peaux 19 (injection ou thermoformage) permet d'optimiser les coûts selon les volumes de pièces considérées.
- La présence d'un adaptateur 23 permet de pouvoir utiliser différentes formes de peaux 19 sur une unique interface structurelle 18.
- Une telle dissociation peau 19 de côté de caisse / interface structurelle 18 permet une personnalisation sur les formes et sur les couleurs.
- La masse globale du véhicule n'est pas impactée et voir même diminuée fortement, la densité du plastique étant six fois inférieure à celle de l'acier.
- Les moyens de fixation 25 sont adaptables en fonction des zones et des contraintes géométriques du véhicule.
- Tout type de procédé de peinture peut être utilisé, à savoir peinture en ligne d'usine, peinture hors ligne et en reprise ou en préparation, ou même aucun procédé de peinture n'est nécessaire, dans le cas de matières composites teintées masse (colorants ou teintes inclus dans la résine).

L'invention n'est pas limitée aux différents modes de réalisation décrits ci-dessus. Notamment, les peaux 19 de côtés de caisse arrière peuvent être de matériaux, de formes, et de dimensions différents et peuvent être fabriquées par tout type de procédé différent, tant que la structure de caisse 10 comporte une interface structurelle 18 commune au niveau de son côté de caisse arrière 17, apte à recevoir différentes versions de peaux 19 de côté de caisse (principe d'interchangeabilité maintenu).

Notamment, les peaux 19 de côté de caisse peuvent être réalisées en matière thermodur ou en matière thermoplastique par un procédé de type RTM (Resin Transfert Moulding) ou par un procédé de type SMC (Sheet Moulding Component) ou par tout autre type de procédé dérivé des deux procédés précités.

Le nombre et le type des moyens de fixation 25 de la peau 19 de côté de caisse sur l'interface structurelle 18 peuvent être différents. D'une façon générale, les moyens de fixation 25 dépendent de la taille des peaux 19, des aspects et jeux à respecter, etc., et doivent correspondre à une solution de démontage/remontage pour l'interchangeabilité des peaux. Par exemple, de tels moyens de fixation pourraient être utilisés, à savoir vis à tôle avec écrou tôle, vis auto poinçonneuse, rivet de type « plasti-rivet » (principe d'un clou écartant des pattes), clip de maintien sur tôle et vis, rivet métallique.

Dans d'autres variantes de réalisation non représentées, les moyens de fixation démontable peuvent être remplacés par un principe de collage, tant que la colle permet le principe d'interchangeabilité des versions de peaux 19 sur l'interface structurelle 18.

L'invention s'applique à tout type de véhicule automobile à grand volume de production et dont la structure de caisse cherche à imaginer des parties du véhicule « variables » permettant de changer en partie de type de carrosserie, d'usage du véhicule selon les désirs du client, à l'achat voir même en cours de vie du produit, donc avec des volumes de pièces beaucoup plus faibles, mais à un coût acceptable.

## Revendications

1. Structure de caisse (10) d'un véhicule automobile comportant au moins deux côtés de caisse (11, 12) reliés en partie supérieure par un pavillon (13) et délimitant chacun deux ouvertures (14, 15) pour des portes latérales associées du véhicule, chaque côté de caisse (11, 12) comportant au moins un côté de caisse arrière (17), chacun comprenant une interface structurelle (18) soudée au reste de la structure (10) et sur laquelle vient se fixer une peau (19) de côté de caisse, ladite peau (19) de côté de caisse étant interchangeable et ladite interface structurelle (18) étant commune quelle que soit la version de peau (19) de côté de caisse qu'elle reçoit,
structure (10) **caractérisée en ce que** ladite interface structurelle (18) comporte une première portion pleine (20) et une seconde portion (21) ajourée délimitant un réseau de bretelles (22) structurelles, destinées notamment à renforcer le côté de caisse arrière (17) en cas d'appui sur la peau (19) de côté de caisse associée.

2. Structure (10) selon la revendication précédente, **caractérisée en ce que** ladite interface structurelle (18) comporte au moins deux bretelles longitudinales (22a) et au moins une bretelle transversale (22b).

3. Structure (10) selon l'une quelconque des revendications précédentes, **caractérisée en ce que** ladite interface structurelle (18) est réalisée en tôle métallique, par exemple en acier ou en aluminium.

4. Structure (10) selon l'une quelconque des revendications précédentes, **caractérisée en ce que** la peau (19) de côté de caisse est fixée sur l'interface structurelle (18) par des moyens (25) de fixation démontable.

5. Structure (10) selon la revendication précédente, **caractérisée en ce que** lesdits moyens (25) de fixation démontable sont du type à fixation positive, par exemple du type système de vis-écrou.

6. Structure (10) selon l'une quelconque des revendications précédentes, **caractérisée en ce que** ladite peau (19a) de côté de caisse est une pièce en matière plastique réalisée par thermoformage.

7. Structure (10) selon la revendication précédente, **caractérisée en ce que** ladite peau (19a) thermoformée est fixée sur ladite interface structurelle (18) par l'intermédiaire d'un adaptateur (23), dont la forme et les dimensions permettent de gérer les écarts d'interface avec la structure de caisse (10).

8. Structure (10) selon l'une des revendications 6 et 7, **caractérisée en ce que** des moyens de calage (24), par exemple du type mastic ou mousse, sont agencés entre ladite interface structurelle (18) et ladite peau (19a) thermoformée.

9. Structure (10) selon l'une quelconque des revendications 6 à 8, **caractérisée en ce que** ladite peau (19a) thermoformée est réalisée en polypropylène sans renfort et/ou talquée.

10. Structure (10) selon l'une quelconque des revendications 1 à 5, **caractérisée en ce que** ladite peau (19b) de côté de caisse est une pièce en matière plastique réalisée par injection.

11. Structure (10) selon la revendication précédente, **caractérisée en ce que** des moyens de positionnement (26), par exemple du type pions de centrage et/ou clips de fixation, sont agencés entre ladite interface structurelle (18) et ladite peau (19b) injectée.

12. Structure (10) selon l'une des revendications 10 et 11, **caractérisée en ce que** ladite peau (19b) injectée est réalisée en polypropylène sans renfort et/ou talquée.

## Patentansprüche

1. Karosseriestruktur (10) eines Kraftfahrzeugs, umfassend mindestens zwei Karosserieseiten (11, 12), die im oberen Teil durch ein Dach (13) verbunden sind und jeweils zwei Öffnungen (14, 15) für zugeordnete Seitentüren des Fahrzeugs begrenzen, wobei jede Karosserieseite (11, 12) mindestens eine hintere Karosserieseite (17) aufweist, die jeweils eine Strukturschnittstelle (18) aufweist, die an dem Rest der Struktur (10) anschweißt ist und auf der eine Schale (19) auf der Karosserieseite befestigt wird, wobei die Schale (19) auf der Karosserieseite austauschbar ist und die Strukturschnittstelle (18) gemeinsam ist, unabhängig von der Version der Schale (19) auf der Karosserieseite, die sie aufnimmt,
wobei die Struktur (10) **dadurch gekennzeichnet ist, dass** die Strukturschnittstelle (18) einen ersten massiven Abschnitt (20) und einen zweiten durchbrochenen Abschnitt (21) aufweist, der ein Netz von strukturellen Riemen (22) begrenzt, die insbesondere dazu bestimmt sind, die hintere Karosserieseite (17) im Fall der Auflage auf der zugeordneten Schale (19) auf der Karosserieseite zu verstärken.

2. Struktur (10) nach dem vorhergehenden Anspruch, **dadurch gekennzeichnet, dass** die Strukturschnittstelle (18) mindestens zwei Längsriemen (22a) und mindestens einen Querriemen (22b) aufweist.

3. Struktur (10) nach einem der vorhergehenden Ansprüche, **dadurch gekennzeichnet, dass** die Strukturschnittstelle (18) aus Metallblech, beispielsweise aus Stahl oder aus Aluminium, hergestellt ist.

4. Struktur (10) nach einem der vorhergehenden Ansprüche, **dadurch gekennzeichnet, dass** die Schale (19) auf der Karosserieseite durch abnehmbare Befestigungsmittel (25) auf der Strukturschnittstelle (18) befestigt ist.

5. Struktur (10) nach dem vorhergehenden Anspruch, **dadurch gekennzeichnet, dass** die abnehmbaren Befestigungsmittel (25) vom Typ der positiven Befestigung, beispielsweise vom Typ des Schraube-Mutter-Systems sind.

6. Struktur (10) nach einem der vorhergehenden Ansprüche, **dadurch gekennzeichnet, dass** die Schale (19a) auf der Karosserieseite ein Kunststoffteil ist, das durch Thermoformen hergestellt ist.

7. Struktur (10) nach dem vorhergehenden Anspruch, **dadurch gekennzeichnet, dass** die thermogeformte Schale (19a) auf der Strukturschnittstelle (18) durch einen Adapter (23) befestigt ist, dessen Form und Abmessungen ermöglichen, die Schnittstellenabweichungen mit der Karosseriestruktur (10) auszugleichen.

8. Struktur (10) nach einem der Ansprüche 6 und 7, **dadurch gekennzeichnet, dass** Füllmittel (24), beispielsweise vom Typ des Kitts oder des Schaums, zwischen der Strukturschnittstelle (18) und der thermogeformten Schale (19a) angeordnet sind.

9. Struktur (10) nach einem der Ansprüche 6 bis 8, **dadurch gekennzeichnet, dass** die thermogeformte Schale (19a) aus Polypropylen ohne Verstärkung hergestellt und/oder talkumiert ist.

10. Struktur (10) nach einem der Ansprüche 1 bis 5, **dadurch gekennzeichnet, dass** die Schale (19a) auf der Karosserieseite ein Kunststoffteil ist, das durch Spritzen hergestellt ist.

11. Struktur (10) nach dem vorhergehenden Anspruch, **dadurch gekennzeichnet, dass** Positioniermittel (26), beispielsweise vom Typ der Zentrierstifte und/oder Befestigungsclips, zwischen der Strukturschnittstelle (18) und der gespritzten Schale (19b) angeordnet sind.

12. Struktur (10) nach einem der Ansprüche 10 und 11, **dadurch gekennzeichnet, dass** die gespritzte Schale (19b) aus Polypropylen ohne Verstärkung hergestellt und/oder talkumiert ist.

## Claims

1. Body structure (10) of a motor vehicle, comprising at least two body sides (11, 12) connected in the upper part by a roof (13) and each defining two openings (14, 15) for associated side doors of the vehicle, each body side (11, 12) comprising at least one rear body side (17), each comprising a structural interface (18) welded to the rest of the structure (10) and to which a body side skin (19) is fixed, the said body side skin (19) being interchangeable and the said structural interface (18) being common irrespective of the version of body side skin (19) that it receives,
**which structure (10) is characterized in that** the said structural interface (18) comprises a first solid portion (20) and a second apertured portion (21) defining an array of structural straps (22) intended in particular to reinforce the rear body side (17) in the event that there should be bearing contact on the associated body side skin (19).

2. Structure (10) according to the preceding claim, **characterized in that** the said structural interface (18) comprises at least two longitudinal straps (22a) and at least one transverse strap (22b).

3. Structure (10) according to any one of the preceding claims, **characterized in that** the said structural interface (18) is made of metal sheet, for example steel or aluminium.

4. Structure (10) according to any one of the preceding claims, **characterized in that** the body side skin (19) is fixed to the structural interface (18) by removable fixing means (25).

5. Structure (10) according to the preceding claim, **characterized in that** the said removable fixing means (25) are of the positive fixing type, for example of the nut-bolt system type.

6. Structure (10) according to any one of the preceding claims, **characterized in that** the said body side skin (19a) is a plastics part produced by thermoforming.

7. Structure (10) according to the preceding claim, **characterized in that** the said thermoformed skin (19a) is fixed to the said structural interface (18) via an adapter (23) whose shape and dimensions make it possible to manage the discrepancies of interface with the body structure (10).

8. Structure (10) according to either of Claims 6 and 7, **characterized in that** position-setting means (24), for example of the mastic or foam type, are arranged between the said structural interface (18) and the said thermoformed skin (19a).

9. Structure (10) according to any one of Claims 6 to 8, **characterized in that** the said thermoformed skin (19a) is made of reinforcement-free and/or talc-containing polypropylene.

10. Structure (10) according to any one of Claims 1 to 5, **characterized in that** the said body side skin (19b) is a plastics part produced by injection-moulding.

11. Structure (10) according to the preceding claim, **characterized in that** positioning means (26), for example of the centring pin and/or fixing clip type, are arranged between the said structural interface (18) and the said injection-moulded skin (19b).

12. Structure (10) according to either of Claims 10 and 11, **characterized in that** the said injection-moulded skin (19b) is made of reinforcement-free and/or talc-containing polypropylene.
